# EUROPEAN PATENT SPECIFICATION

(11) **EP 2 600 475 B1**
(45) Date of publication and mention of the grant of the patent: **20.05.2015**
(21) Application number: 12194454.0
(22) Date of filing: 27.11.2012
(51) Int. Cl.: H02G 3/06, F16L 25/12, F16L 19/00, F16B 39/00, F16B 39/10, F16B 39/28, F16L 23/02, F16L 23/036, F16L 27/10

(54) **Anti-rotation cable restraint for connecting flexible ducts**
Kabelsicherung mit Drehschutz zur Verbindung flexibler Leitungen
Retenue de câble anti-rotation pour connecter des conduits flexibles

(30) Priority: 02.12.2011 US 201113310430
(43) Date of publication of application: 05.06.2013
(73) Proprietor: Honeywell International Inc., Morristown, NJ 07962-2245 (US)
(72) Inventor: Kolder, Mark Edmund, Morristown, NJ 07962-2245 (US); Fewell, Mark, Morristown, NJ 07962-2245 (US)
(74) Representative: Houghton, Mark Phillip

(56) References cited:
- DE-A1-102005 052 419
- GB-A- 190 904 560
- US-A1- 2011 181 041

## Description

### BACKGROUND AND SUMMARY OF THE INVENTION

The present invention generally relates to a way of connecting flexible ducts to each other. Such ducts may be connected by securing a set of cable restraints to a flange at an end of each duct. The ducts may be disconnected by decoupling the set of cable restraints from the flanges. Such an assembly is shown in US 2011/0181041.

The cable restraints may typically include a metal shaft or wire rope that includes a fitting with wrench flats at the interior end and an external screw thread at the exterior end of the fitting. The interior wrench flats and exterior thread with nut may then be used to secure the cable restraint to each flange. The wrench flats refers to the flats on the surface of the flange facing the other duct, while the "exterior" nut refers to the nut on the surface of the flange facing away from the other duct. The interior wrench flats must be positioned such that the spacing between the two cables is maintained at an appropriate distance. The exterior nut must then be tightened while the interior wrench flats is prevented from rotating. When de-coupling the cables, the interior wrench flats must be prevented from rotating while the exterior nut is loosened.

A technician may typically complete the task of connecting or disconnecting the ducts using two hands and at least two tools (e.g., one hand to hold a wrench and secure the interior wrench flats and another hand to hold a wrench and tighten the exterior nut). In addition, the technician may need to measure the gap between the two duct flanges and/or use a "jig" or other such device to maintain the appropriate spacing between the duct flanges.

As can be seen, there is a need for a cable restraint that may be installed or removed with one hand and one tool, allowing easier access in confined spaces in which the ducts may be connected. In addition, there is a need for a cable restraint that automatically sets the proper gap between connected duct flanges without the need for any measurement, gage, and/or jig.

In one aspect of the present invention, an anti-rotation cam adapted to prevent rotation of a cable restraint includes a body having a through-hole adapted to be coupled to a fitting of the cable restraint, a first leg extending out from the body and adapted to prevent the cam from rotating in a clockwise direction, and a second leg extending out from the body and adapted to prevent the cam from rotating in a counter-clockwise direction.

In another aspect of the present invention, an anti-rotation cable restraint for connecting ducts includes a flexible cable, a first threaded end coupled to the cable along an axis of the cable, and a first anti-rotation cam coupled to the first threaded end perpendicular to the axis of the cable, the cam being adapted to prevent rotation of the cable and the threaded end when a nut is secured to the first threaded end.

In yet another aspect of the present invention, a method of coupling a first flexible duct with a first flange to a second flexible duct with a second flange using an anti-rotation cable restraint includes: aligning the cable restraint with a through-hole of the first flange, securing the cable restraint to the first flange using a first lock nut, aligning the cable restraint with a through-hole of the second flange, and securing the cable restraint to the second flange using a second lock nut.

These and other features, aspects and advantages of the present invention will become better understood with reference to the following drawings, description and claims.

### BRIEF DESCRIPTION OF THE DRAWINGS

Figure 1 illustrates a perspective view of an anti-rotation cable restraint according to an exemplary embodiment of the present invention;
Figure 2 illustrates a side view of the cable restraint of Figure 1, specifically showing the anti-rotation cam;
Figure 3 illustrates a perspective view of the cable restraint of Figure 1 during use;
Figure 4 illustrates a section view of the cable restraint of Figure 1 during use, specifically highlighting the gap maintained by the cable restraint; and
Figure 5 illustrates a conceptual process 500 used in some embodiments when connecting or disconnecting a pair of ducts.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features. Broadly, embodiments of the present invention generally provide a way to connect duct segments using one or more cable restraints. The cable restraints of the present invention may be configured to be anti-rotation such that the restraint does not rotate when coupled to a duct flange. In this manner, the cable restraints may be attached to (or detached from) the duct flange using a single tool (and/or a single hand or other manipulation apparatus).

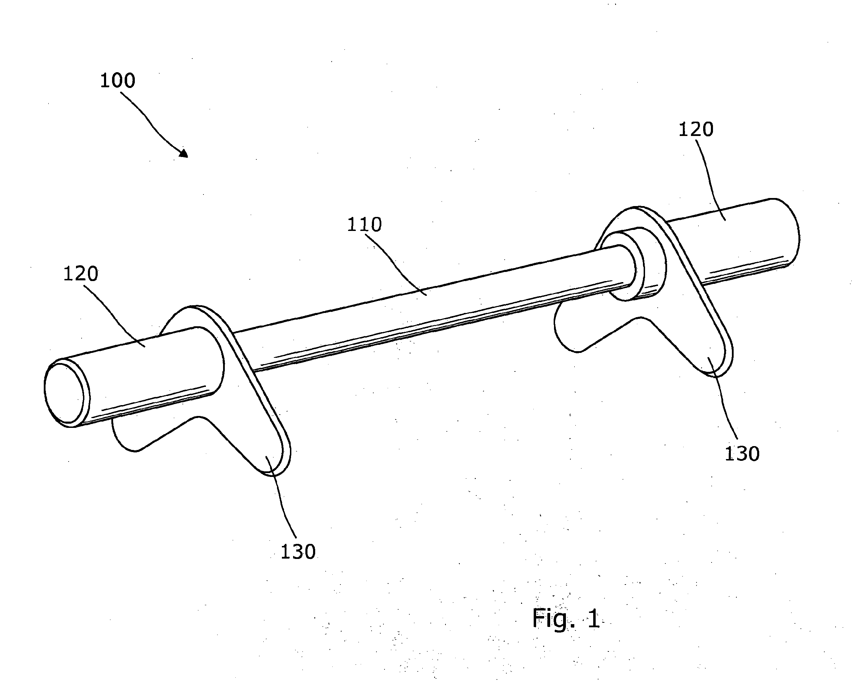

Figure 1 illustrates a perspective view of an anti-rotation cable restraint according to an exemplary embodiment of the present invention. Specifically, this figure shows the various components of the cable restraint 100, which may include a cable 110, two threaded ends (or "fittings") 120, and two anti-rotation cams 130. The cable 110 may be an appropriate length of flexible wire rope of an appropriate diameter for the duct segments to be connected. The cable extends through threaded end 120 and may provide a male component for coupling with a threaded end fitting. The threaded ends may be cylindrical pieces of metal of an appropriate diameter.

As shown in Figure 1, the anti-rotation cams 130 may be V-shaped pieces of metal (i.e., a triangular shape having two legs) that may be coupled to the threaded ends such that the cams rotate when the threaded end rotates. The cams 130 may be fashioned from a sheet of flat metal of an appropriate thickness (e.g., a thickness that is at least partly based on the stresses to be absorbed by the cams).

The cable 110 may be made of various materials (e.g., braided steel "rope" cables) and/or be formed in different lengths, as appropriate. The specific dimensions of the cable may be based at least partly on various factors such as the diameter, weight, operating tension, and/or flange characteristics of the ducts being connected. In addition, the intended use of the ducts may at least partly influence the dimensions of the cables. The ducts and duct flanges may include various materials, types, etc.

The threaded ends 120 may be any appropriate diameter and/or pitch. The diameter of the threaded ends may depend on various factors such as the size of any available through-holes in the flanges of the ducts being connected, the diameter of a securing nut used to couple each threaded end to a flange, etc. The pitch may depend on the type or pitch of the securing nut, and/or other appropriate factors. The securing nut attached to the threaded joint may be a lock nut (i.e., a nut that resists loosening under vibration and/or torque). The threaded ends may be attached to the cable in various appropriate ways (and/or may be formed in conjunction with the cable). For instance, the threaded ends may be swaged or welded to the cable, may be attached using adhesive, etc.

The anti-rotation cams 130 may be V-shaped pieces of metal of appropriate thickness, height, and width. The cams may be coupled to the threaded end 120. The cams may be attached to the threaded ends in various appropriate ways (e.g., welding the cams to the threaded ends, using a nut, forming the cams and threaded ends as a single casting, using adhesive, etc.). The thickness, height, and/or width of the anti-rotation cams 130 may be at least partially based on various appropriate factors such as the diameter, size, and/or type of cables, the characteristics of the flanges, intended use, etc.

Although the anti-rotation cable restraints 100 have been described with reference to various specific features, one of ordinary skill in the art will recognize that the restraints may be configured in various different ways without departing from the spirit of the invention. For instance, although the restraints have been described as being formed of metal components, the restraints may also be made at least partly from various other appropriate materials (e.g., plastic, rubber, etc.) and in various appropriate ways (e.g., welded, bonded, formed, injection-molded, etc.). As another example, although the cams have been described as V-shaped, the cams may be made in various other appropriate shapes (e.g., oval, rectangular, etc.). The materials, manufacturing processes, and/or shapes used may depend on various appropriate factors associated with various particular applications.

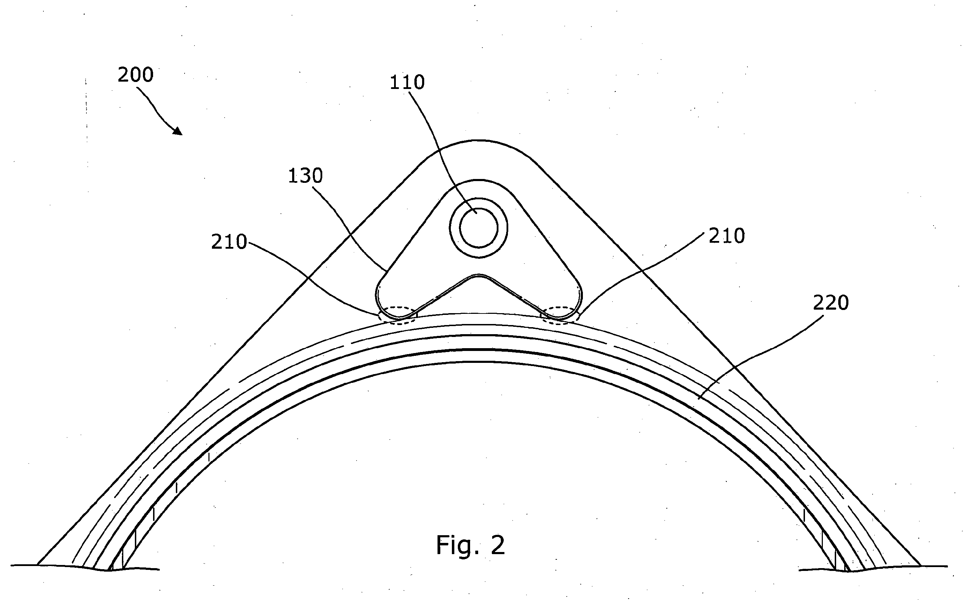

Figure 2 illustrates a side view 200 of the cable restraint of Figure 1, specifically showing the anti-rotation cam 130. As shown, the anti-rotation cam (which is V-shaped in this example) includes two contact sections 210 which each prevent the cam from rotation in a particular direction (i.e., a first contact section may prevent the cam from rotating in a clockwise direction while a second contact section may prevent the cam from rotating in a counter-clockwise direction, or vice-versa) when coming in contact with a portion of a surface of the duct flange 220. Because the cam is coupled to the fitting 120 at a through-hole in the body of the cam, the cable is also prevented from rotating. The V-shaped cam provides a way to prevent rotation in both a clockwise and counter-clockwise direction, depending on which contact section is impeded by the flange.

The anti-rotation cam 130 may be configured in various appropriate ways to match various flanges. For instance, the height or width of the "V" may be varied such that appropriate mounting clearance is provided by the cable restraint (i.e., the "V" may be sized such that the cable restraint allows some rotational movement without contacting the cable flange). In this manner, the restraint may be aligned with an associated attachment point on the flange (e.g., the position of the restraint may be varied as the threaded end of the restraint is positioned within a through-hole in the flange, without having the cam come in contact with the surface of the duct flange) in a way that allows some flexibility in the position of the cables as they are attached or detached. In addition, the edges of the contact sections may be shaped in various appropriate ways (e.g., rounded at various diameters, angular, etc.).

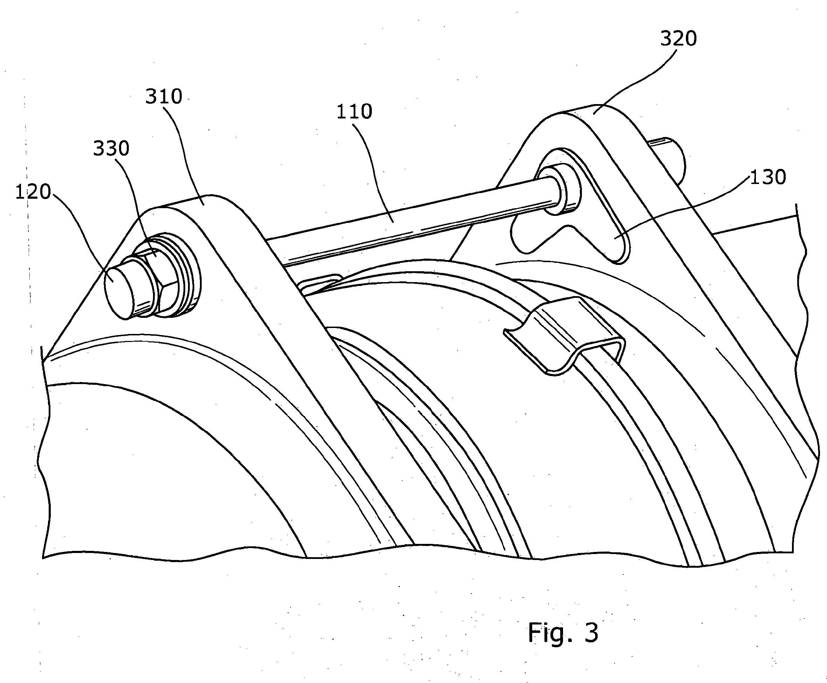

Figure 3 illustrates a perspective view of the cable restraint 100 of Figure 1 during use. As shown, the cable restraint is coupled at a first end to a duct flange 310 of a first duct and coupled at a second end from a duct flange 320 of a second duct. The cable restraint is secured to the duct flange in this example with a nut 330 placed on the exterior side of the duct flange.

Different numbers and/or types of cable restraints may be used to secure various duct segments depending on various factors. For instance, the number of cable restraints used to connect ducts at one location may vary depending on the size of the ducts, the operating conditions of the ducts, the loads placed on the ducts, etc. In addition, a single connection may include different restraints (e.g., restraints of different physical dimensions, different material compositions, etc.), which may vary depending on the size of the ducts, the operating conditions of the ducts, the types of ducts, etc.

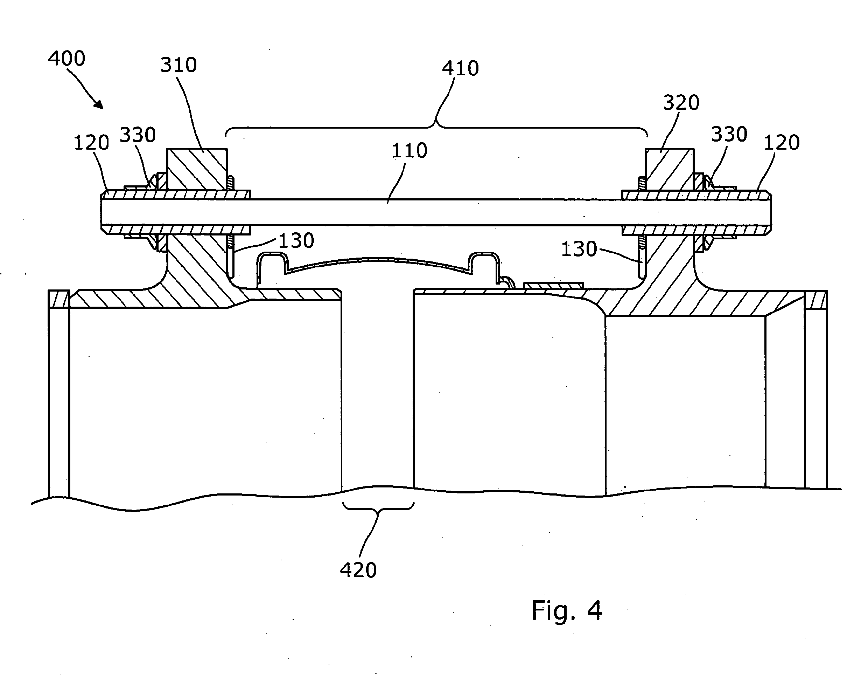

Figure 4 illustrates a section view 400 of the cable restraint of Figure 1 during use, specifically highlighting a gap 410 maintained by the cable restraint that corresponds to a desired (or "controlled") gap 420 between the flanges. The desired gap may be at least partly based on various appropriate factors (e.g., the types of duct, the types of flanges, the operating conditions of the connected ducts, etc.). Different cable restraints may be adapted to maintain different desired gaps, as appropriate. The desired gap may be any appropriate distance (e.g., a distance specified by the duct manufacturer and/or the flange manufacturer, distances calculated by a system designer, etc.) for the ducts being connected.

As shown in Figure 4, the anti-rotation cams 130, each being coupled to each of the outer threaded fittings 120, which are each coupled to the cable 110 in this example, do not allow linear movement of the duct flanges 310-320 along the cable 110 (or linear movement of the ducts corresponding to the flanges). In this manner, the anti-rotation restraint 100 maintains the desired gap 420 between the ducts by maintaining a corresponding gap 410 between the flanges of the ducts.

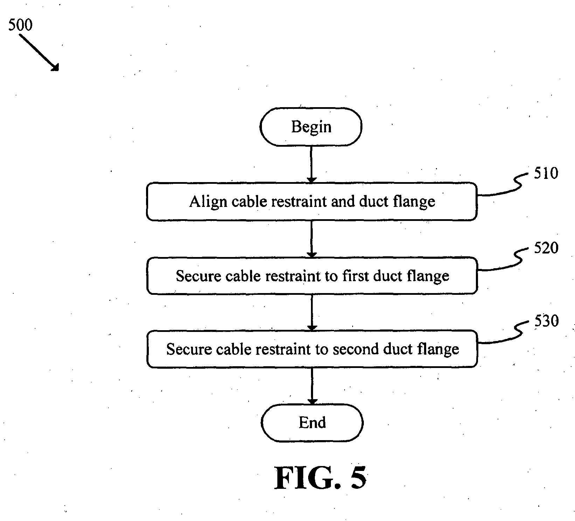

Figure 5 illustrates a conceptual process 500 used in some possible embodiments when connecting or disconnecting a pair of ducts. Such ducts may include flanges 310-320 such as those described above in reference to Figure 3. The process may begin when a pair of ducts is to be connected or disconnected. Next, when the ducts are to be disconnected, the cable restraint and duct flange may be aligned (at 510). When the ducts are to be disconnected, the restraint and duct will already be aligned, rendering such alignment unnecessary.

The process then secures (at 520) the cable restraint to a first duct flange. When the cables are to be disconnected, the cable restraint may instead be released from the first duct flange. As described above in reference to Figure 2, when the cable restraint is secured or released, the anti-rotation cam may prevent the cable restraint from turning, allowing one-handed installation or removal of a securing nut coupled to a threaded end of the cable restraint.

Next, the process secures (at 530) the cable restraint to a second duct flange. When the cables are to be disconnected, the cable restraint may instead be released from the second duct flange. As above, when the cable restraint is secured or released, the anti-rotation cam prevents the cable restraint from turning, allowing one-handed installation or removal of a securing nut coupled to the other threaded end of the cable restraint.

Process 500 (or portions thereof) may be performed multiple times (e.g., when installing more than one cable restraint at a connection) and/or may be partially performed (e.g., when disconnecting the cable restraint(s) from one flange but not the other).

It should be understood, of course, that the foregoing relates to exemplary embodiments of the invention and that modifications may be made without departing from the spirit and scope of the invention as set forth in the following claims.

## Claims

1. An anti-rotation cable restraint (100) for connecting ducts, the cable restraint (100) comprising:
a flexible cable (110);
a first threaded end (120) coupled to the cable (110) along an axis of the cable (110); **characterized in that**
a first anti-rotation cam (130) is coupled to the first threaded end (120) perpendicular to the axis of the cable (110), the cam (130) being adapted to prevent rotation of the cable (110) and the first threaded end (120) when a nut (330) is secured to the first threaded end (120).

2. The anti-rotation cable restraint (100) of claim 1, **characterized in that** the first anti-rotation cam (130) is V-shaped.

3. The anti-rotation cable restraint (100) of claim 1, **characterized in that** the nut (330) is a lock nut.

4. The anti-rotation cable restraint (100) of claim 1, **characterized in that** the first threaded end (120) is adapted to be coupled to a duct flange (310) of a flexible duct.

5. The anti-rotation cable restraint (100) of claim 1, **characterized in that** the flexible cable (110) comprises braided steel.

6. The anti-rotation cable restraint (100) of claim 1, including:
a second threaded end (120) coupled to the cable (110) along the axis of the cable (110), wherein the second threaded end is adapted to be coupled to a duct flange (320) of a flexible duct; **characterized in that**
a second anti-rotation cam (130) is coupled to the second threaded end (120) perpendicular to the axis of the cable (110),
wherein the first and second anti-rotation cams (130) are spaced along the cable (110) such that a desired gap (410) is maintained between the first (310) and second (320) duct flanges.

7. The anti-rotation cable restraint (100) of claim 1, **characterized in that** the nut (330) is secured using a single tool.

8. The anti-rotation cable restraint (100) of claim 1, **characterized in that** the first anti-rotation cam (130) is swaged to the first threaded end (120).

9. The anti-rotation cable restraint (100) of claim 1, **characterized in that** in the first anti-rotation cam (130) is welded to the first threaded end (120).

10. The anti-rotation cable restraint (100) of claim 1, **characterized in that** the anti-rotation cam (130) has rounded edges.

## Patentansprüche

1. Kabelsicherung (100) mit Drehschutz zur Verbindung flexibler Leitungen, wobei die Kabelsicherung (100) Folgendes umfasst:
ein flexibles Kabel (110);
ein erstes Gewindeende (120), das entlang einer Achse des Kabels (110) mit dem Kabel (110) gekoppelt ist; **dadurch gekennzeichnet, dass**
ein erster Drehschutznocken (130) mit dem ersten Gewindeende (120) senkrecht zu der Achse des Kabels (110) gekoppelt ist, wobei der Nocken (130) dazu ausgeführt ist, eine Drehung des Kabels (110) und des ersten Gewindeendes (120) zu verhindern, wenn eine Mutter (330) an dem ersten Gewindeende (120) befestigt wird.

2. Kabelsicherung (100) mit Drehschutz nach Anspruch 1, **dadurch gekennzeichnet, dass** der erste Drehschutznocken (130) V-förmig ist.

3. Kabelsicherung (100) mit Drehschutz nach Anspruch 1, **dadurch gekennzeichnet, dass** die Mutter (330) eine Sicherungsmutter ist.

4. Kabelsicherung (100) mit Drehschutz nach Anspruch 1, **dadurch gekennzeichnet, dass** das erste Gewindeende (120) zur Kopplung mit einem Leitungsflansch (310) einer flexiblen Leitung ausgeführt ist.

5. Kabelsicherung (100) mit Drehschutz nach Anspruch 1, **dadurch gekennzeichnet, dass** das flexible Kabel (110) ein Stahlgeflecht umfasst.

6. Kabelsicherung (100) mit Drehschutz nach Anspruch 1, umfassend:
ein zweites Gewindeende (120), das entlang der Achse des Kabels (110) mit dem Kabel (110) gekoppelt ist, wobei das zweite Gewindeende zur Kopplung mit einem Leitungsflansch (320) einer flexiblen Leitung ausgeführt ist; **dadurch gekennzeichnet, dass**
ein zweiter Drehschutznocken (130) mit dem zweiten Gewindeende (120) senkrecht zur Achse des Kabels (110) gekoppelt ist,
wobei der erste und der zweite Drehschutznocken (130) entlang dem Kabel (110) beabstandet sind, so dass zwischen dem ersten (310) und dem zweiten (320) Leitungsflansch ein gewünschter Spalt (410) erhalten bleibt.

7. Kabelsicherung (100) mit Drehschutz nach Anspruch 1, **dadurch gekennzeichnet, dass** die Mutter (330) unter Verwendung eines einzigen Werkzeugs befestigt wird.

8. Kabelsicherung (100) mit Drehschutz nach Anspruch 1, **dadurch gekennzeichnet, dass** der erste Drehschutznocken (130) mit dem ersten Gewindeende (120) verstemmt ist.

9. Kabelsicherung (100) mit Drehschutz nach Anspruch 1, **dadurch gekennzeichnet, dass** der erste Drehschutznocken (130) mit dem ersten Gewindeende (120) verschweißt ist.

10. Kabelsicherung (100) mit Drehschutz nach Anspruch 1, **dadurch gekennzeichnet, dass** der Drehschutznocken (130) abgerundete Ränder aufweist.

## Revendications

1. Système de retenue par câble (100) antirotation servant à raccorder des conduits, le système de retenue par câble (100) comprenant :
un câble souple (110) ;
une première extrémité filetée (120) accouplée au câble (110) le long d'un axe du câble (110) ;
**caractérisé en ce que**
une première came antirotation (130) est accouplée à la première extrémité filetée (120) perpendiculairement à l'axe du câble (110), la came (130) étant conçue pour empêcher toute rotation du câble (110) et de la première extrémité filetée (120) lorsqu'un écrou (330) est fixé à la première extrémité filetée (120).

2. Système de retenue par câble (100) antirotation selon la revendication 1, **caractérisé en ce que** la première came antirotation (130) présente la forme d'un V.

3. Système de retenue par câble (100) antirotation selon la revendication 1, **caractérisé en ce que** l'écrou (330) est un écrou de blocage.

4. Système de retenue par câble (100) antirotation selon la revendication 1, **caractérisé en ce que** la première extrémité filetée (120) est conçue pour être accouplée à une bride de conduit (310) d'un conduit souple.

5. Système de retenue par câble (100) antirotation selon la revendication 1, **caractérisé en ce que** le câble souple (110) comprend de l'acier tressé.

6. Système de retenue par câble (100) antirotation selon la revendication 1, comprenant :
une seconde extrémité filetée (120) accouplée au câble (110) le long de l'axe du câble (110), la seconde extrémité filetée étant conçue pour être accouplée à une bride de conduit (320) d'un conduit souple ; **caractérisé en ce que** une seconde came antirotation (130) est accouplée à la seconde extrémité filetée (120) perpendiculairement à l'axe du câble (110),
les première et seconde cames antirotation (130) étant espacées le long du câble (110) de telle sorte qu'un écart souhaité (410) soit maintenu entre les première (310) et seconde (320) brides de conduits.

7. Système de retenue par câble (100) antirotation selon la revendication 1, **caractérisé en ce que** l'écrou (330) est fixé au moyen d'un seul outil.

8. Système de retenue par câble (100) antirotation selon la revendication 1, **caractérisé en ce que** la première came antirotation (130) est sertie sur la première extrémité filetée (120).

9. Système de retenue par câble (100) antirotation selon la revendication 1, **caractérisé en ce que** la première came antirotation (130) est soudée sur la première extrémité filetée (120).

10. Système de retenue par câble (100) antirotation selon la revendication 1, **caractérisé en ce que** la came antirotation (130) comporte des bords arrondis.
